# EUROPÄISCHE PATENTSCHRIFT

(11) **EP 0 600 304 B1**
(45) Veröffentlichungstag und Bekanntmachung des Hinweises auf die Patenterteilung: **28.08.1996**
(21) Anmeldenummer: 93118536.7
(22) Anmeldetag: 18.11.1993
(51) Int. Cl.: A01D 80/00

(54) **Heuwerbungsmaschine**
Hay making machine
Machine pour la fenaison

(30) Priorität: 03.12.1992 DE 9216498 U
(43) Veröffentlichungstag der Anmeldung: 08.06.1994
(73) Patentinhaber: H. Niemeyer Söhne GmbH & Co. KG, D-48466 Hörstel (DE)
(72) Erfinder: Niemeyer, Reinhard, Dr., D-48477 Hörstel-Riesenbeck (DE); Ungruh, Josef, D-48429 Rheine (DE)

(56) Entgegenhaltungen:
- EP-A- 0 014 376
- EP-A- 0 539 662
- DE-A- 4 019 942
- US-A- 4 723 404

## Beschreibung

Die Erfindung betrifft eine Heuwerbungsmaschine zum Frontanbau an Traktoren, insbesondere Schwader, gemäß dem Oberbegriff des Anspruchs 1.

Aus der DE-A1 35 29 771 ist eine Heuwerbungsmaschine bekannt, die im Frontanbau an Traktoren zwei angetriebene Werkzeugkreisel zur Bildung von Mittelschwaden besitzt. Um das Gerät für den Straßentransport auf eine zulässige Transportbreite zu bringen, wird vorgeschlagen, die beiden Werkzeugkreisel um vertikale Achsen zur Gerätemitte hin zu schwenken und bei Bedarf die äußeren Zinkenarme der Werkzeugkreisel abzubauen. Diese aufwendige Handhabung der Maschine ist nachteilig.

Aufgabe der Erfindung ist es, einen Schwader zum Frontanbau an Traktoren zu schaffen, bei dem mit einfachen Mitteln in Transportstellung eine optimale Lage des Schwaders zum Traktor erreichbar ist.

Diese Aufgabe wird erfindungsgemäß durch die Merkmale im kennzeichnenden Teil des Anspruchs 1 gelöst. Bezüglich weiterer, vorteilhafter Ausgestaltungen der Erfindung wird auf die Ansprüche 2 bis 15 verwiesen.

Durch das vorteilhafte Schwenken der Träger der Werkzeugkreisel um jeweils eine räumlich angeordnete Schwenkachse wird erreicht, daß sie aus der Arbeitsstellung mit etwa senkrechter Drehachse in eine Transportstellung mit etwa horizontaler Drehachse gelangen, wobei sie gleichzeitig so geschwenkt werden können, daß die Werkzeugspitzen der Zinken einander zugewandt sind. Dies ist insbesondere bei in Fahrtrichtung ausladenden Frontschwadern für die Verkehrssicherheit von Vorteil.

Insbesondere für Traktoren mit geringer zusätzlicher Belastungsfähigkeit der Frontachse ist es vorteilhaft, wenn der Gesamtschwerpunkt des Frontgerätes möglichst nahe am Traktor liegt. Hier sieht die Erfindung vor, daß die Werkzeugkreisel durch einen hydraulischen Stellzylinder zum Traktor hin geschwenkt werden können. Gleichzeitig kann das hydraulische Aushubgestänge an der Frontseite des Traktors abgesenkt werden, damit die Transporthöhe des Gerätes verringert wird.

Ein Verteilergetriebe an der vorderen Zapfwelle des Traktors mit günstig angeordneten Abtrieben lassen beispielsweise für die Antriebsgelenkwellen zu den beiden Werkzeugkreiseln so günstige Voraussetzungen zu, daß diese für die verschiedenen Schwenkvorgänge in die endgültige Transportstellung nicht abgebaut werden müssen.

Nach der Erfindung ist es ferner in vorteilhafter Weise möglich, die räumlich angeordneten Schwenkachsen so zu legen, daß die Werkzeugkreisel über jeweils einen hydraulischen Stellzylinder in einem Hub so geschwenkt werden können, daß die beiden Werkzeugkreisel in ihrer endgültigen Transportstellung zumindest teilweise über die Traktorräder und neben die Traktorhaube verschwenkt werden. Hier werden auf besonders einfache Weise die Werkzeugkreisel und damit die Gesamtschwerpunktslage nahe an den Traktor herangeführt. Die Vorderachsbelastung ist gering, wodurch auch leistungsschwächere Traktoren für Heuwerbungsmaschinen mit großer Arbeitsbreite Verwendung finden können.

Beim Frontanbau von Schwadern ist es wünschenswert, wahlweise Mittelschwaden oder Seitenschwaden legen zu können. Ohne auf die Vorteile der räumlich angeordneten Schwenkachse für eine günstige Transportstellung verzichten zu müssen, sieht die Erfindung vor, daß mindestens ein Werkzeugkreisel im Bereich seines Trägers durch eine zusätzliche vertikale Schwenkachse in eine Seitenschwadstellung schwenkbar ist. Er wird durch einen hydraulischen Stellzylinder geschwenkt, der hydraulisch mit einem weiteren Stellzylinder am Verteilergetriebe koppelbar ist, so daß die Umschaltung der Drehrichtung für den zweiten Werkzeugkreisel mit dem Schwenkvorgang vonstatten geht. Gleichzeitig sorgt vorzugsweise ein mechanisches Lenkergestänge dafür, daß die Kurvenbahn des geschwenkten Werkzeugkreisels so verdreht wird, daß die Arbeitszinken ihre für das Seitenschwaden richtige Position erhalten. Bei dem nicht geschwenkten Werkzeugkreisel müssen die Arbeitszinken umgedreht werden, damit sie zu der geänderten Drehrichtung des Kreisels die richtige Position einnehmen. Hier sieht die Erfindung vor, daß die Arbeitszinken beispielsweise jeweils wahlweise auf zwei Zinkenträger verdrehfest anbringbar sind und daß die Zinkenträger über ein Zahnradpaar verdrehbar miteinander verbunden sind. Auf diese einfache Weise wird die neue, der Drehrichtung angepaßte Steuerung der Zinken erreicht.

Zum Seitenschwaden muß das seitliche Schwadtuch in seine optimale Position gebracht werden. Dies geschieht nach der Erfindung durch einen hydraulischen Stellzylinder, der ebenfalls mit dem Stellzylinder zum Schwenken des Werkzeugkreisels in Seitenschwadposition hydraulisch gekoppelt sein kann.

Die Koppelung der hydraulischen Stellzylinder für die Schwenkung eines Werkzeugkreisels in die Seitenschwadposition, die Umschaltung der Drehrichtung des nicht geschwenkten Werkzeugkreisels, die Verstellung des seitlichen Schwadtuches und die mechanische Verstellung der Kurve zur Zinkensteuerung ermöglicht nach der Erfindung eine Vereinfachung der Bedienung insofern, als mit einer Verstellung des hydraulischen Stellhebels vom Traktorsitz aus die wesentlichen Einstellfunktionen für die Umstellung zum Seitenschwaden durchgeführt werden können.

Weitere Vorteile der Erfindung ergeben sich aus der nachfolgenden Beschreibung und den Zeichnungen, in denen einige Ausführungsbeispiele nach der Erfindung schematisch, angenähert maßstäblich dargestellt sind.

Es zeigt:
- Fig. 1 -: Einen Frontschwader zum Mittelschwaden in Arbeits-Stellung in einer Draufsicht.
- Fig. 2 -: Einen Frontschwader gemäß Fig. 1 in Arbeitsstellung in einer Seitenansicht.
- Fig. 3 -: Einen Frontschwader gemäß Fig. 1 in Transportstellung in einer Draufsicht.
- Fig. 4 -: Ein weiteres Ausführungsbeispiel eines Frontschwaders in Transportstellung in einer Draufsicht.
- Fig. 5 -: Einen Frontschwader gemäß Fig. 4 in einer Seitenansicht.
- Fig. 6 -: Einen Frontschwader gemäß Fig. 4 in der endgültigen Transportstellung.
- Fig. 7 -: Ein weiteres Ausführungsbeispiel eines Frontschwaders zum Mittelschwaden in Arbeitsstellung in einer Draufsicht.
- Fig. 8 -: Einen Frontschwader gemäß Fig. 7 in einer Seitenansicht.
- Fig. 9 -: Einen Frontschwader gemäß Fig. 7 in der endgültigen Transportstellung in einer Draufsicht.
- Fig. 10 -: Einen Frontschwader gemäß Fig. 9 in einer Seitenansicht.
- Fig. 11 -: Ein weiteres Ausführungsbeispiel eines Frontschwaders zum Mittel- und Seitenschwaden in Arbeitsstellung in einer Draufsicht.
- Fig. 12 -: Ein Detail X aus Fig. 11 in vergrößertem Maßstab.
- Fig. 13 -: Einen Frontschwader gemäß Fig. 11 in der Arbeitsstellung Seitenschwaden in einer Draufsicht.
- Fig. 14 -: Eine Detailansicht der Zinkenarmsteuerung gemäß Fig. 13.
- Fig. 15 -: Eine Detailansicht zweier Zinkenträgerenden gemäß Fig. 13 in einer Draufsicht.
- Fig. 16 -: Einen Schnitt A-A gemäß Fig. 15.

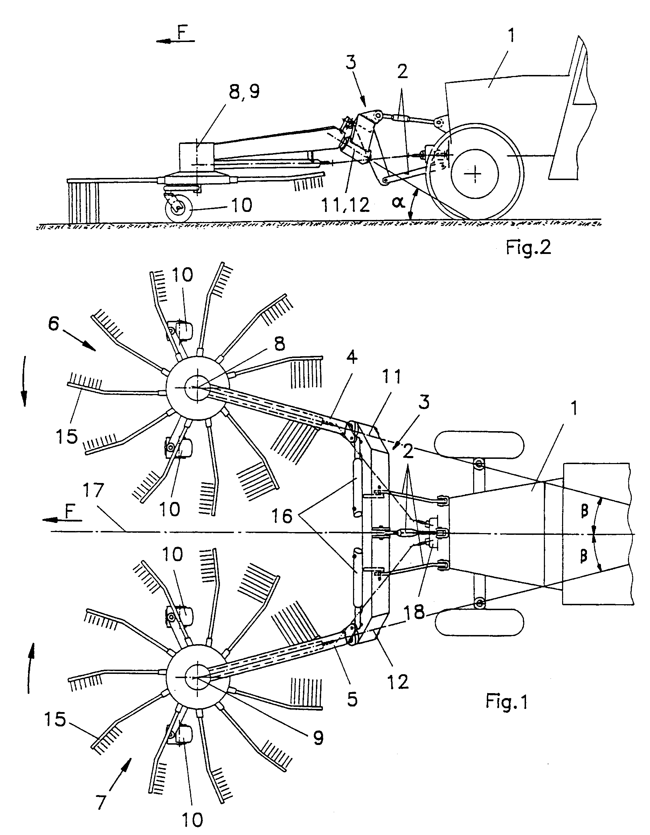

In den Fig. 1 - 16 sind einige Ausführungsbeispiele von Frontschwadern nach der Erfindung dargestellt. Sie sind an der Frontseite eines Traktors (1) über ein Verbindungsgestänge (2), das hydraulisch betätigbar ist, mit diesem verbunden und bewegen sich bei der Arbeit in Fahrtrichtung (F). Auf die Darstellung unwesentlicher Details in den Zeichnungen, z.B. die hydraulischen Verbindungsleitungen zum Traktor, wurde verzichtet.

Ein erstes Ausführungsbeispiel zeigen die Fig. 1 - 3. In Fig. 1 ist die Draufsicht eines zweikreiseligen Frontschwaders zur Mittelschwadbildung in Arbeitsstellung dargestellt. Die von der Traktorzapfwelle angetriebenen Werkzeugkreisel (6,7) drehen bei der Arbeit um vertikale Drehachsen (8,9), wobei die Zinkenarme (15) über nicht dargestellte Kurvenscheiben gesteuert werden. Die Werkzeugkreisel (6,7) stützen sich bei der Arbeit auf Stützrädern (10) ab und können über diese in der Höhe eingestellt werden. Jeder Werkzeugkreisel (6,7) ist über ein Träger (4,5) mit einem Tragbock (3) verbunden, der seinerseits die Verbindung zum Verbindungsgestänge (2) des Traktors (1) herstellt.

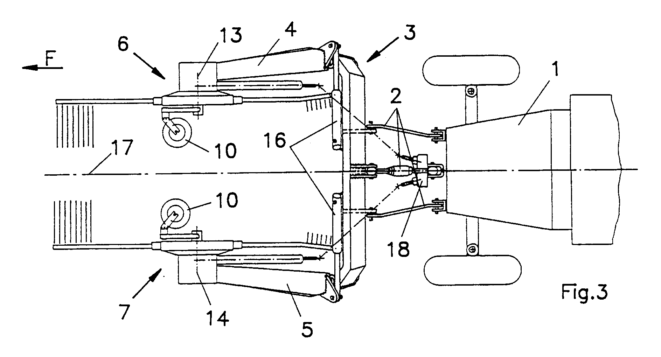

Am traktorseitigen Ende des Trägers (4,5) ist jeweils eine räumlich angeordnete Schwenkachse (11,12), die mit dem Tragbock (3) verbunden ist. Um die Werkzeugkreisel (6,7) und damit den gesamten Frontschwader in die Transportstellung (Fig. 3) zu bringen, wird der Frontschwader zunächst mit dem Verbindungsgestänge (2) angehoben. Dann werden die Werkzeugkreisel (6,7) durch vorzugsweise hydraulische Stellzylinder (16), die einerseits mit dem Tragbock (3) und andererseits über Hebel mit den Trägern (4,5) gelenkig verbunden sind, um die Schwenkachsen (11,12) so geschwenkt, daß die Werkzeugspitzen der Werkzeugkreisel (6,7) einander zugewandt zur Symmetrieebene (17) weisen. Durch diese Verschwenkung um die räumlichen Schwenkachsen (11,12) werden die vertikalen Drehachsen (8,9) der Werkzeugkreisel (6,7) zu horizontalen Drehachsen (13,14).

Die Schwenkachsen (11,12) bilden in Arbeitsstellung der Maschine mit der Bodenebene einen Winkel (α), der vorzugsweise 30° beträgt und mit der fahrtrichtungsparallelen Symmetrieebene (17) einen Winkel (β) von vorzugsweise 20°. Die Schwenkachsen (11,12) sind dabei in Arbeitsstellung der Werkzeugkreisel (6,7) entgegen der Fahrtrichtung (F) abwärts und zur Symmetrieebene (17) des Gerätes hin gerichtet.

Die Fig. 2 stellt das Ausführungsbeispiel eines Frontschwaders in einer Seitenansicht in Arbeitsstellung dar. In Fig. 3 ist die Maschine in einer Draufsicht in Transportstellung zu sehen.

Der Antrieb der Werkzeugkreisel (6,7) erfolgt vorzugsweise über getrennt angeordnete Gelenkwellen von einem Verteilergetriebe (18) aus, das mit der Frontzapfwelle des Traktors verbunden ist. Die Abtriebe des Verteilergetriebes (18) und die geräteseitigen Anschlüsse für die Gelenkwellen sind so gelegt, daß beim Schwenken um die Schwenkachsen (11,12) die zulässigen Freigänge der Gelenkwellen nicht überschritten werden.

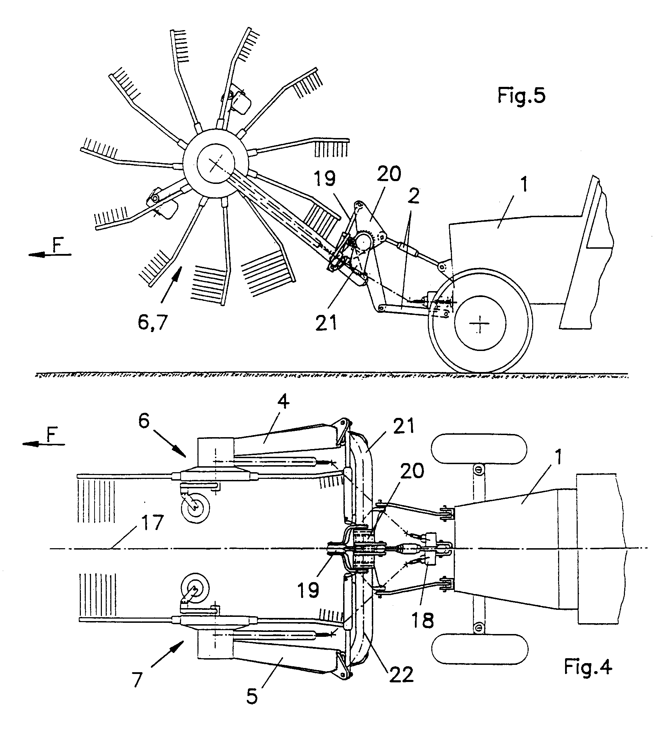

Ein weiteres Ausführungsbeispiel eines Frontschwaders nach der Erfindung zeigen die Fig. 4 - 6. Fig. 4 zeigt einen Schwader in einer durch das Verbindungsgestänge (2) angehobenen Stellung in einer Draufsicht und Fig. 5 in einer Seitenansicht.

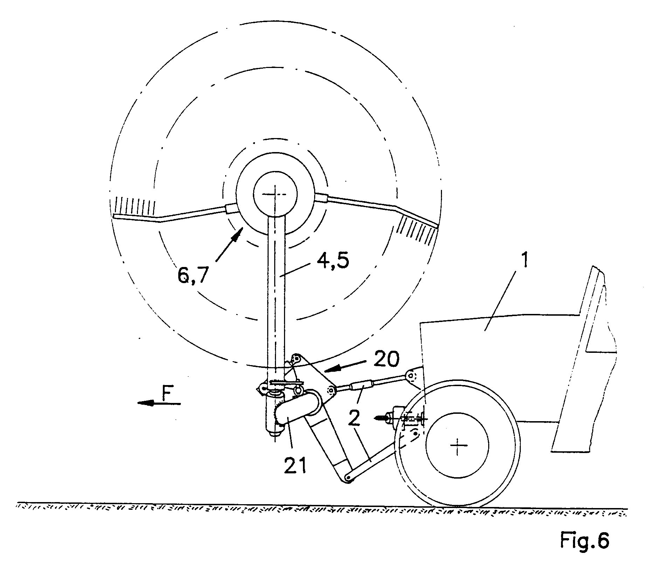

Es handelt sich hier im wesentlichen um einen Frontschwader gemäß Fig. 1, der jedoch zusätzlich mit einem Stellzylinder (19) versehen ist, der den Tragbock (20), mit dem schwenkbaren Tragrohr (21) verbindet. Dadurch besteht die Möglichkeit, die Werkzeugkreisel (6,7) mit den Trägern (4,5) um eine horizontale Klappachse (22) so zu schwenken, daß diese in der Transportstellung näher zum Traktor gelangen und damit der Gesamtschwerpunkt des Gerätes vorteilhaft verlagert wird. Um eine möglichst geringe Transporthöhe zu erreichen, kann das Verbindungsgestänge (2) zusätzlich gesenkt werden (Fig. 6).

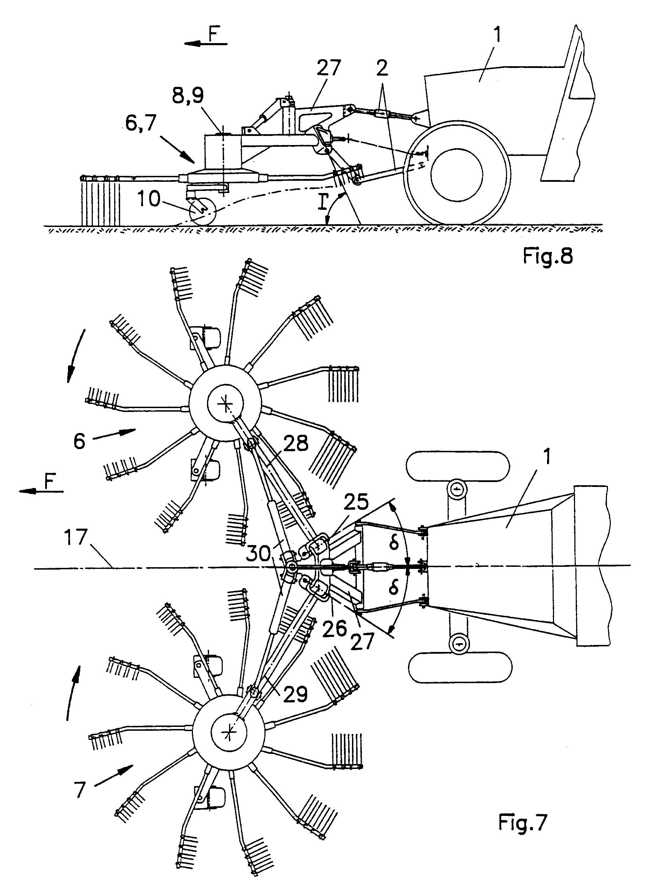

In den Fig. 7 - 10 ist ein weiteres Ausführungsbeispiel nach der Erfindung dargestellt. Die räumlichen Schwenkachsen (25,26) dieses Beispiels sind entgegen der Fahrtrichtung (F) abwärts und in Fahrtrichtung (F) zur Symmetrieebene (17) des Gerätes hin gerichtet. Dadurch kann beim Anheben der Werkzeugkreisel (6,7) um die Schwenkachsen (25,26) erreicht werden, daß diese in einem Hub so geschwenkt werden können, daß sie in ihrer endgültigen Transportstellung zumindest teilweise über die Traktorräder und neben die Traktorhaube gelangen.

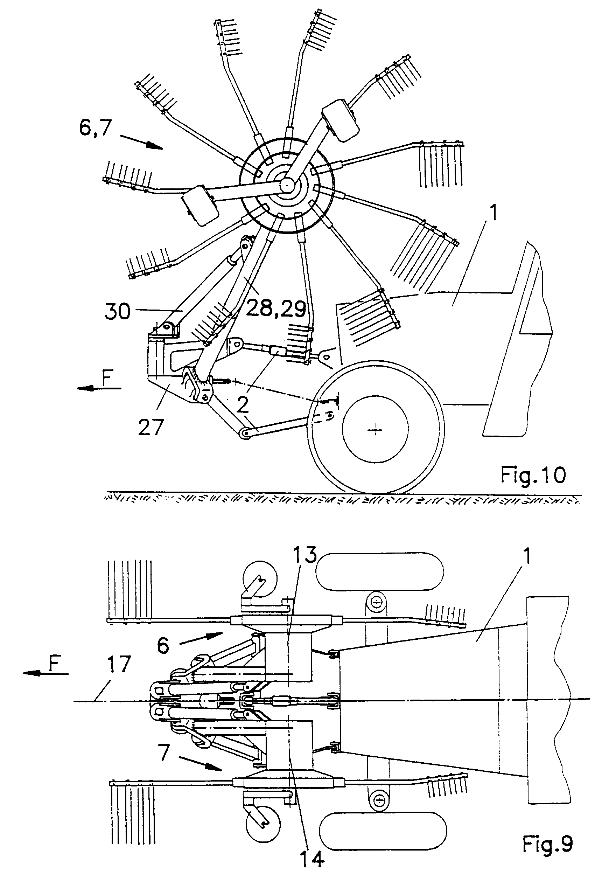

Fig. 7 zeigt das Ausführungsbeispiel in einer Draufsicht in Arbeitsstellung als Frontschwader zum Mittelschwaden, während Fig. 8 diesen Schwader in einer Seitenansicht darstellt. Die Schwenkachsen (25,26) bilden mit der Bodenebene einen Winkel (Γ) von vorzugsweise 30° und mit der Symmetrieebene (17) des Gerätes einen Winkel (δ) von vorzugsweise 30°. Im übrigen entspricht der Frontschwader in wesentlichen Ausrüstungsdetails dem der Fig. 1. Auch hier sind die Werkzeugkreisel (6,7) durch Träger (28,29) mit den Schwenkachsen (25,26) und damit mit dem Tragbock (27) verbunden. Die Stellzylinder (30) sind einerseits mit dem Tragbock (27) und andererseits mit den Trägern (28,29) der Werkzeugkreisel (6,7) gelenkig verbunden. Die Stellzylinder (30) werden an die Traktorhydraulik angeschlossen und vom Traktorsitz aus bedient.

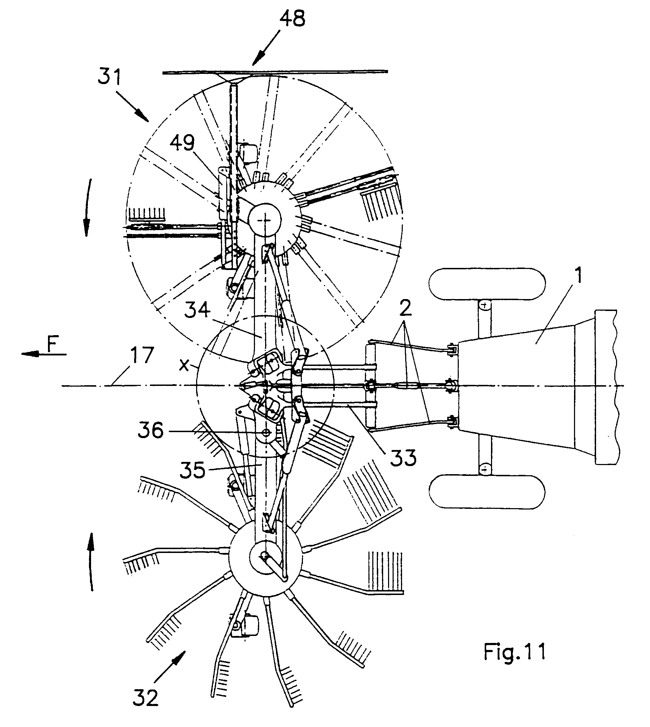

Fig. 9 und Fig. 10 zeigen den Frontschwader in der endgültigen Transportstellung. Hier ist insbesondere der kurze Schwerpunktsabstand des Schwaders zum Traktor erkennbar. Die Breite des Gerätes liegt in der Transportstellung im wesentlichen innerhalb der Kontur des Traktors, so daß hier auch keine besonderen Maßnahmen bezüglich der Stellung der Arbeitszinken zur Symmetrieebene (17) des Gerätes erforderlich sind. Die Verkehrsgefährdung durch den Frontschwader in Transportstellung ist durch die Erfindung verringert.

Wird der Abstand zwischen den Schwenkachsen (11,12;25,26) verstellbar ausgeführt, beispielsweise durch die Verwendung von Schiebestücken und einer Einstellvorrichtung wie Spindel, Stellzylinder, o.ä., besteht die Möglichkeit, die Schwadgröße bei Mittelschwaden den Gegebenheiten vorteilhaft anzupassen. Der gleiche Effekt ist erreichtbar, wenn beispielsweise die Träger (4,5;28,29) längenveränderlich sind. Auf eine bildliche Darstellung einer derartigen Ausführung wurde verzichtet.

Ein weiteres Ausführungsbeispiel nach der Erfindung ist in den Fig. 11 - 16 dargestellt. Sie zeigen einen Frontschwader zum wahlweisen Ziehen von Mittelschwaden oder rechten Seitenschwaden.

Fig. 11 zeigt die Draufsicht des Ausführungsbeispiels in einer Arbeitsstellung zum Mittelschwaden. Der Schwader hat im wesentlichen zwei Werkzeugkreisel (31,32), die über Träger (34,35) mit dem Tragbock (33) über die Schwenkachsen (25,26) gelenkig verbunden sind. Die Ausrichtung der Schwenkachsen (25,26) ist ähnlich wie die aus dem Ausführungsbeispiel in Fig. 7. Die Träger (34,35) sind im wesentlichen rechtwinklig zur Fahrtrichtung (F) ausgerichtet. Um die endgültige Transportstellung zu erreichen, wird der Frontschwader über das Verbindungsgestänge (2) angehoben, in die Mittelschwadstellung gebracht, und die Werkzeugkreisel (31,32) um die Schwenkachsen (25,26) vorzugsweise mit Hilfe von hydraulischen Stellzylindern in ihre endgültige Transportposition geschwenkt. Sie erreichen dann eine Lage, wie sie in Fig. 10 dargestellt ist.

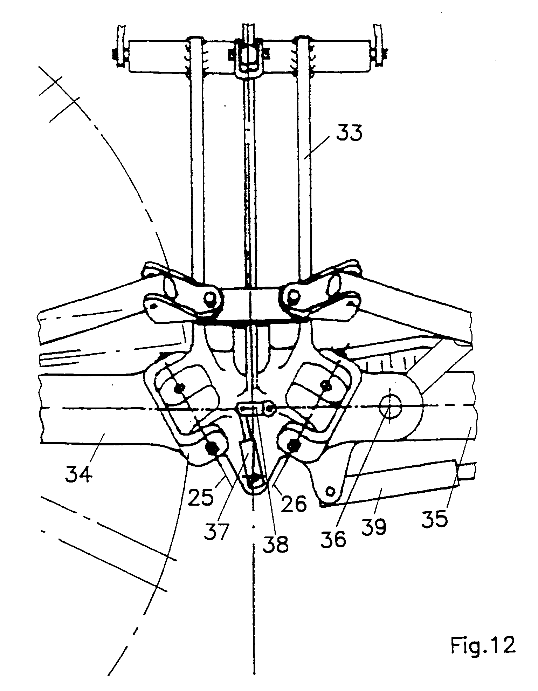

Fig. 12 zeigt eine vergrößerte Darstellung des Details X gemäß Fig. 11.

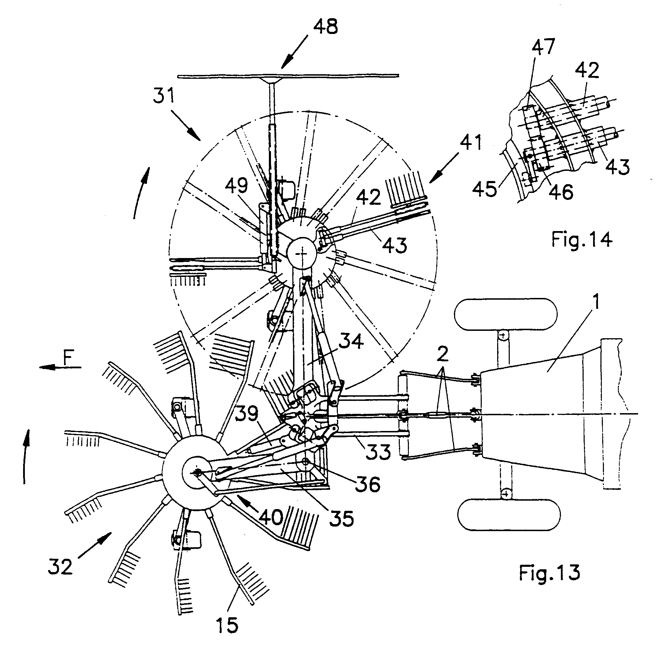

Um den Frontschwader in eine rechte Seitenschwadstellung zu bringen, wie sie aus Fig. 13 zu ersehen ist, wird der Träger (35) um eine vertikale Schwenkachse (36) mit Hilfe eines hydraulischen Stellzylinders (39) geschwenkt. Mit der Verschwenkung wird gleichzeitig ein Lenkergestänge (40) betätigt, das mit der Kurvenscheibe des Werkzeugkreisel (32) so gekoppelt ist, daß die Kurvenscheibe eine der neuen Position des Werkzeugkreisels (32) zum Seitenschwaden entsprechende Stellung einnimmt und dadurch die Zinkenarme (15) richtig steuert.

Vorzugsweise die Drehrichtung des nicht geschwenkten Werkzeugkreisels (31) wird dadurch umgekehrt, daß ein Stellzylinder (37) einen Stellhebel (38) betätigt, der auf das Antriebsgetriebe so einwirkt, daß sich die Drehrichtung des Werkzeugkreisels (31) umkehrt, (Fig. 12).

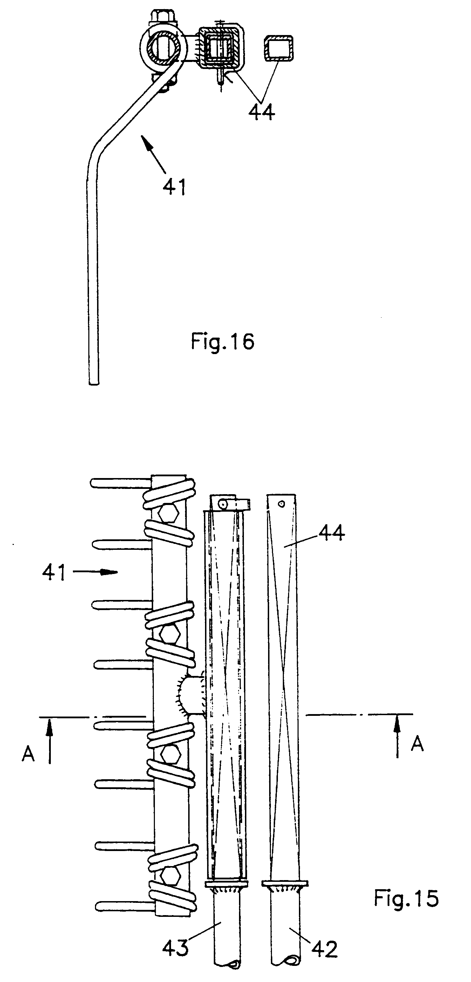

Für das Seitenschwaden müssen die Arbeitszinken (41) der neuen Drehrichtung angepaßt und damit umgedreht werden. Das geschieht vorzugsweise dadurch, daß der Arbeitszinken mit seiner Halterung vom Vierkantansatz (44) des Zinkenträgers (42) umgekehrt auf den Vierkantansatz (44) des Zinkenträgers (43) aufgeschoben und axial gesichert wird. Fig. 15 stellt in einer Draufsicht das Detail aus Fig. 13 in der Seitenschwadstellung dar.

Fig. 16 zeigt einen Schnitt A-A gemäß Fig. 15. Sie zeigt die verdrehsichere Befestigung des Arbeitszinkens (41) auf den Vierkantansätzen (44) der Zinkenträger (42,43).

Um die Steuerung der Arbeitszinken (41) des Werkzeugkreisels (31) der Seitenschwadstellung anzupassen, ist nach der Erfindung vorgesehen, daß an den Enden der Zinkenträger (42,43) im Bereich der Kurvenbahn (45) ein ineinandergreifendes Zahnradpaar (46,47) die beiden Zinkenträger (42,43) kinematisch miteinander verbindet, so daß die Steuerung des umgekehrten Arbeitszinkens (41) den Erfordernissen zum Seitenschwaden angepaßt wird. Fig. 14 zeigt dieses Detail in vergrößerter Darstellung.

Das seitliche Schwadtuch (48) wird von der Mittelschwadstellung (Fig. 11) in die Seitenschwadstellung (Fig. 13) gebracht, indem beispielsweise ein hydraulischer Stellzylinder (49) betätigt wird, der den Halter des Schwadtuchs (48) gegen einen vorwählbaren Anschlag fährt, und dadurch die Größe des Seitenschwades vorbestimmt.

Um die Umstellung vom Mittelschwaden zum Seitenschwaden möglichst einfach handhaben zu können, ist nach der Erfindung vorgesehen, daß die Stellzylinder (39,37,49) hydraulisch miteinander koppelbar sind, so daß mit einer Betätigung der Traktorhydraulik vom Traktorsitz aus alle wesentlichen Verstellungen schnell und einfach durchgeführt werden können.

Sollen linke Seitenschwaden mit der Maschine gezogen werden, muß der Frontschwader spiegelbildlich ausgerüstet werden.

## Patentansprüche

1. Heuwerbungsmaschine zum Frontanbau an Traktoren, insbesondere Schwader, die durch ein Verbindungsgestänge (2) zum Traktor (1) anhebbar ist, mit mindestens zwei, über je einen Träger (4,5) mit dem Tragbock (3) des Gerätes verbundene, um etwa senkrechte Drehachsen (8,9) angetriebene Werkzeugkreisel (6,7), deren Werkzeuge in Arbeitsstellung über Stützräder (10) höheneinstellbar sind, und bei der jeder Werkzeugkreisel (6,7) zur Überführung in eine Transportstellung mit seinem Träger (4,5) um eine Schwenkachse schwenkbar ist, dadurch gekennzeichnet, daß die Träger (4,5;28,29) zum Überführen der Werkzeugkreisel (6,7;31,32) in die Transportstellung um je eine räumlich angeordnete Schwenkachse (11,12;25,26) schwenkbar sind, wobei die Schwenkachsen (11,12) in Arbeitsstellung der Werkzeugkreisel (6,7) entgegen der Fahrtrichtung (F) abwärts und zur Symmetrieebene (17) des Gerätes hin gerichtet sind oder die Schwenkachsen (25,26) in Arbeitsstellung der Werkzeugkreisel (6,7;31,32) entgegen der Fahrtrichtung (F) abwärts und in Fahrtrichtung (F) zur Symmetrieebene (17) des Gerätes hin gerichtet sind, so daß die Werkzeugkreisel (6,7;31,32) aus der Arbeitsstellung mit etwa senkrechter Drehachse (8,9) in eine Transportstellung mit etwa horizontaler Drehachse (13,14) gelangen.

2. Heuwerbungsmaschine nach Anspruch 1, dadurch gekennzeichnet, daß in Transportstellung die Werkzeugkreisel (6,7) einander zugewandte Werkzeugspitzen aufweisen.

3. Heuwerbungsmaschine nach Anspruch 1, dadurch gekennzeichnet, daß die Schwenkachse (11,12) mit der Bodenebene einen Winkel (α) vorzugsweise von 30° und mit einer fahrtrichtungsparallelen Symmetrieebene (17) einen Winkel (β) von vorzugsweise 20° bildet.

4. Heuwerbungsmaschine nach einem der Ansprüche 1 bis 3, dadurch gekennzeichnet, daß die Träger (4,5) der Werkzeugkreisel (6,7) in der Transportstellung eine in Fahrtrichtung (F) ansteigende Ausrichtung aufweisen.

5. Heuwerbungsmaschine nach einem der Ansprüche 1 bis 4, dadurch gekennzeichnet, daß die Werkzeugkreisel (6,7) nach Hochklappen in die Transportstellung zusätzlich um eine etwa horizontale zusätzliche Klappachse (22) zum Traktor (1) hin schwenkbar sind.

6. Heuwerbungsmaschine nach Anspruch 1, dadurch gekennzeichnet, daß die Schwenkachse (25,26) mit der Bodenebene einen Winkel (Γ) von vorzugsweise 30° und mit einer fahrtrichtungsparallelen Symmetrieebene (17) einen Winkel (δ) von vorzugsweise 30° bildet.

7. Heuwerbungsmaschine nach Anspruch 6, dadurch gekennzeichnet, daß die Schwenkachsen (25,26) für die Werkzeugkreisel (6,7;31,32) so angeordnet sind, daß die Werkzeugkreisel (6,7;31,32) in ihrer endgültigen Transportstellung zumindest teilweise über die Traktorräder und neben die Traktorhaube verschwenkt sind.

8. Heuwerbungsmaschine nach einem der Ansprüche 1 bis 7, dadurch gekennzeichnet, daß die Träger (28,29) der Werkzeugkreisel (6,7;31,32) in der Transportstellung eine entgegen der Fahrtrichtung (F) ansteigende Ausrichtung aufweisen.

9. Heuwerbungsmaschine nach einem der Ansprüche 1 bis 8, dadurch gekennzeichnet, daß der horizontale Abstand zwischen den Schwenkachsen (11,12;25,26) verstellbar ist.

10. Heuwerbungsmaschine nach einem der Ansprüche 1 bis 9, dadurch gekennzeichnet, daß der Träger (35) mindestens eines Werkzeugkreisels (32) um eine zusätzliche vertikale Schwenkachse (36) zum Verschwenken des Werkzeugkreisels (32) in eine Seitenschwadstellung schwenkbar ist.

11. Heuwerbungsmaschine nach Anspruch 10, dadurch gekennzeichnet, daß die Kurvenbahn des um eine vertikale Schwenkachse (36) schwenkbaren Werkzeugkreisels (32) durch ein Lenkergestänge (40) beim Schwenken in eine Seitenschwadposition verdrehbar ist.

12. Heuwerbungsmaschine nach Anspruch 10 oder 11, dadurch gekennzeichnet, daß die Drehrichtung vorzugsweise des nicht schwenkbaren Werkzeugkreisels (31) durch das Schwenken des anderen Werkzeugkreisels (32) umkehrbar ist.

13. Heuwerbungsmaschine nach einem der Ansprüche 10 bis 12, dadurch gekennzeichnet, daß der Stellzylinder (39) zum Verschwenken des Werkzeugkreisels (32) in Seitenschwadposition mit dem Stellzylinder (37) zum Umschalten des Antriebsgetriebes und dem Stellzylinder (49) zur Verstellung des Schwadtuches (48) hydraulisch koppelbar ist.

14. Heuwerbungsmaschine nach einem der Ansprüche 10 bis 13, dadurch gekennzeichnet, daß die Arbeitszinken (41) des nicht geschwenkten Werkzeugkreisels (31) durch Umkehren in eine Seitenschwadposition bringbar sind.

15. Heuwerbungsmaschine nach Anspruch 14, dadurch gekennzeichnet, daß die Arbeitszinken (41) jeweils wahlweise auf zwei Zinkenträger (42,43) verdrehfest anbringbar sind, und daß die Zinkenträger (42,43) über ein Zahnradpaar (46,47) verdrehbar miteinander verbunden sind.

## Claims

1. Haymaking machine for installation on the front of tractors, and, in particular, haymaking machines which can be raised by means of a linking rod (2) to the tractor, with at least two powered tool mounts (6,7), driven about approximately vertical axes of rotation (8,9), each connected by means of carrier (4,5) to the carrier block (3) of the device, the tools of the said mounts being height-adjustable in the operating position by means of support wheels (10), and in which each tool mount (6,7) is capable of being swivelled about a swivel axis for moving into a transport position with its carrier, characterised by the fact that the carriers (4,5;28,29) are capable of swivelling about one spatially-arranged swivel axis (11,12;25,26) each, in which context the swivel axes (11,12), in the operating position of the tool mounts (6,7) are directed downwards against the direction of travel (F), and point towards the plane of symmetry (17) of the device, or the swivel axes (25,26), with the tool mounts (6,7; 31,32) in the operating position, point downwards against the direction of rotation (F) towards the plane of symmetry (17) of the device, so that the tool mounts (6,7; 31,32) pass out of the operating position with an approximately vertical direction of rotation (8,9) into a transport position with an approximately horizontal axis of rotation (13,14).

2. Haymaking machine according to Claim 1, characterised by the fact that, in the transport position, the tool mounts (6,7) feature tool tips which are turned towards one another.

3. Haymaking machine according to Claim 1, characterised by the fact that the swiveling axle (11,12) forms an angle (α) to the plane of the surface of the ground of 30° for preference, and for preference forms an angel (β) of 20° to a plane of symmetry (17) parallel to the direction of travel.

4. Haymaking machine according to one of Claims 1 to 3, characterised by the fact that the carriers (4,5) of the tool mounts (6,7) in the transport position feature an alignment which rises in the direction of travel (F).

5. Haymaking machine according to one of Claims 1 to 4, characterised by the fact that the tool mounts (6,7), after being folded up into the transport position, is also capable of being swivelled about an additional folding axis (22) horizontal to the tractor (1).

6. Haymaking machine according to Claim 1, characterised by the fact that the swivelling axes (25,26) form an angle (Γ) of 30° for preferance to the plane of the surface of the ground, and for preference forms an angle (δ) of 30° to a plane of symmetry (17) parallel to the direction of travel.

7. Haymaking machine according to Claim 6, characterised by the fact that the swiveling axles (25,26) for the tool mounts (6,7;31,32) are arranged in such a way that the tool mounts (6,7;31,32) in their final position are swivelled, at least in part, above the tractor wheels and next to the tractor bonnet.

8. Haymaking machine according to one of Claims 1 to 7, characterised by the fact that the carriers (28,29) of the tool mounts (6,7;31,32) in the transport position feature an alignment which rises against the direction of travel (F).

9. Haymaking machine according of Claims 1 to 8, characterised by the fact that the horizontal distance between the swiveling axes (11,12;25,26) is adjustable.

10. Haymaking machine according to one of Claims 1 to 9, characterised by the fact that the carrier (35) of at least one tool mount (32) is capable of swivelling about an additional vertical swivelling axis (36) for swiveling the tool mount (32) into a side swath position.

11. Haymaking machine according to Claim 10, characterised by the fact that the trajectory of the tool mount (32), capable of swivelling about a vertical swivelling axis (36), can be rotated by means of a steering bar (40) when swivelling into a side swath position.

12. Haymaking machine according to Claim 10 or 11, characterised by the fact that the direction of rotation, for preference of the non-swivelling tool mount (31) is reversible by the swivelling of the other tool mount (32).

13. Haymaking machine according to one of Claims 10 or 12, characterised by the fact that the slave cylinder (39) for swivelling the tool mount (32) in the side swath position can be hydraulically coupled to the slave cylinder (37) for reversing the drive train and the slave cylinder (49) for adjusting the swath cloth (48).

14. Haymaking machine according to one of Claims 10 to 13, characterised by the fact that the tines (41) of the tool mount (31) which has not been swivelled can be brought to bear by reverting into a side wath position.

15. Haymaking machine according to Claim 14, characterised by the fact that the tines (41) in each case can be optionally fitted on two tine carriers (42,43), in a rotationally-resistant manner, and are connected to one another in a rotatable manner by means of a pair of gear wheels (46,47).

## Revendications

1. Machine de fenaison destinée à un montage frontal sur des tracteurs, notamment andaineuse, qui peut être relevée par rapport au tracteur (1) par une tringlerie d'attelage (2), comprenant au moins deux rotors porte-outil (6,7) entraînés autour d'axes de rotation (8,9) sensiblement verticaux, et reliés chaque fois par un support (4,5) à un support (3) de l'appareil, les outils de rotor étant réglables en hauteur en position de travail par des roues d'appui (10) et chacun des rotors porte-outil (6,7) peut basculer autour d'un axe de basculement avec son support (4,5) pour passer en position de transport, caractérisée en ce que les supports (4,5;28,29) sont basculants autour d'un axe de basculement (11,12;25,26) respectif disposé dans l'espace pour faire passer les rotors porte-outil (6,7;31,32) en position de transport, et lorsque les rotors porte-outil (6,7) sont en position de travail, les axes de basculement (11,12) sont dirigés vers le bas dans le sens opposé de la direction de déplacement (F) et vers le plan de symétrie (17) de l'appareil, ou encore, lorsque les rotors porte-outil (6,7;31,32) sont en position de travail, les axes de basculement (25,26) sont dirigés vers le bas dans la direction opposée à la direction de circulation (F), et de la direction de circulation (F) vers le plan de symétrie (17) de l'appareil, pour que les rotors porte-outil (6,7;31,32) passent de la position de travail dans laquelle leurs axes de rotation (8,9) sont sensiblement verticaux, à une position de transport avec des axes de rotation (13,14) sensiblement horizontaux.

2. Machine de fenaison selon la revendication 1, caractérisée en ce qu'en position de transport, les rotors porte-outil (6,7) ont des pointes d'outil tournées l'une vers l'autre.

3. Machine de fenaison selon la revendication 1, caractérisée en ce que les axes de basculement (11,12) forment avec le plan du sol, un angle (α) de préférence de 30° et, avec le plan de symétrie (17) paralléle à la direction de circulation, un angle (β) de préférence de 20°.

4. Machine de fenaison selon l'une des revendications 1 à 3, caractérisée en ce que les supports (4,5) des rotors porte-outil (6,7) en position de transport ont une direction montante dans la direction de circulation (F).

5. Machine de fenaison selon l'une des revendications 1 à 4, caractérisée en ce qu'après un relevage en position de transport, les rotors porte-outil (6,7) peuvent en outre basculer vers le tracteur (1), autour d'un axe de rabattement (22) supplémentaire sensiblement horizontal.

6. Machine de fenaison selon la revendication 1, caractérisée en ce que les axes de basculement (25,26) font avec le sol un angle (Γ) égal de préférance à 30° et, avec un plan de symétrie (17) parallèle à la direction de circulation, un angle (δ) de préférence égal à 30°.

7. Machine de fenaison selon la revendication 6, caractérisée en ce que les axes de basculement (25,26) des rotors porte-outil (6,7;31,32) sont disposés pour que les rotors porte-outil (6,7;31,32) en position définitive de transport, soient basculés au moins partiellement par-dessus les roues du tracteur et à côté du capot du tracteur.

8. Machine de fenaison selon l'une des revendications 1 à 7, caractérisée en ce que les supports (28,29) des rotors porte-outil (6,7;31,32) ont une direction montante dans le sens opposé à la direction de circulation (F) lorsqu'ils sont en position de transport.

9. Machine de fenaison selon l'une des revendications 1 à 8, caractérisée en ce que l'écartement horizontal entre les axes de basculement (11,12;25,26) est réglable.

10. Machine de fenaison selon l'une des revendicatins 1 à 9, caractérisée en ce que e support (35) peut faire basculer au moins l'un des rotors porte-outil (32) autour d'un axe de basculement (36) vertical supplémentaire, pour faire, basculer le rotor porte-outil (32) dans une position latérale d'andainage.

11. Machine de fenaison selon la revendication 10, caractérisée en ce que la trajectoire courbe du rotor porte-outil (32) basculant autour d'un axe de basculement vertical (36), peut être tournée par une tringlerie à bras (40) lors du basculement dans une position latérale d'andainage.

12. Machine de fenaison selon la revendication 10 ou 11, caractérisée en ce que le sens de rotation de préférence du rotor porte-outil (31) non basculant peut être inversé par le basculement de l'autre rotor porte-outil (32).

13. Machine de fenaison selon l'une des revendications 10 à 12, caractérisée en ce que le vérin de réglage (39) pour faire basculer le rotor porte-outil (32) dans une position latérale d'andainge, peut être couplé au vérin de réglage (37) pour commuter le point d'eintraînement, et au vérin de réglage (49) pour régler le volet d'andainage (48).

14. Machine de fenaison selon l'une des revendications 10 à 13, caractérisée en ce que les dents (41) du rotor porte-outil (31) non basculant peuvent être mises en position latérale d'andainage par retournement.

15. Machine de fenaison selon la revendication 14, caractérisée en ce que les dents (41) sont chaque fois montées solidaire en rotation sélectivement sur deux supports de dents (42,43), et les supports de dents (42,43) sont reliés en rotation par une paire de dents (46,47).
